# EUROPEAN PATENT APPLICATION

(11) **EP 4 186 676 A1**
(43) Date of publication of application: **31.05.2023**
(21) Application number: 22767445.4
(22) Date of filing: 07.03.2022
(51) Int. Cl.: B29C 45/26, B29C 33/42, B29C 33/38, B29C 33/30, C23F 1/00

(54) **INJECTION MOLD**

(30) Priority: 09.03.2021 KR 20210031021
(71) Applicant: Lg Chem, Ltd., Seoul 07336 (KR)
(72) Inventor: SHIM, Dong Chul, Daejeon 34122 (KR); SHIN, Jung Chul, Daejeon 34122 (KR); JEONG, Byeong Joon, Daejeon 34122 (KR); KIM, Worl Yong, Daejeon 34122 (KR); PARK, Joon Hyoung, Daejeon 34122 (KR); SHIN, Jae Hyun, Daejeon 34122 (KR)
(74) Representative: Goddar, Heinz J.
(86) International application number: PCT/KR2022/003204
(87) International publication number: WO 2022/191549

(57) **Abstract**

The present invention relates to an injection mold. The injection mold according to the present invention is an injection mold for manufacturing an injection-molded product through injection molding, comprising: a transfer mold, which is disposed in front of the injection-molded product and forms a pattern on a front surface of the injection-molded product; and a rear surface mold, which is disposed behind the injection-molded product, wherein an embossing pattern is formed on a rear surface part of the rear surface mold, which faces a rear surface of the injection-molded product.

## Description

### CROSS-REFERENCE TO RELATED APPLICATION

The present application claims the benefit of the priority of Korean Patent Application No. 10-2021-0031021, filed on March 9, 2021, which is hereby incorporated by reference in its entirety.

### TECHNICAL FIELD

The present invention relates to an injection mold.

### BACKGROUND ART

Injection molding is a process for molding an injection-molded product by injecting, into an injection mold, a material to be injection-molded, which is melted by applying heat.

Many parts of vehicles and electronic products have been manufactured by injection molding, and parts having various exterior designs have been provided by using patterns engraved in an injection mold. A design demanded by exterior parts may be a glossy surface (specular surface), but there has been a gradual increase in selection of micro-embossing patterns in order to give an aesthetical function such as textures, and give surface properties such as scratch and stain resistance. However, there is a phenomenon in which the micro-embossing patterns are not uniformly transferred during the injection molding, depending on the structure of the mold, and the resulting gloss difference leads to the frequent occurrence of a phenomenon in which the exterior surface of the molded article is unevenly reflected. Injection-molded products, on which typical embossing patterns are engraved, are generally applied without post processing such as coating/plating, and concealment by the post processing is impossible. Thus, the aesthetical problem with the surfaces becoming dappled is a serious problem, which needs to be urgently solved.

[Prior art document] (Patent document) Korean Patent Registration No. 10-2189820

### DISCLOSURE OF THE INVENTION

### TECHNICAL PROBLEM

One aspect of the present invention is to provide an injection mold capable of implementing uniform transfer onto an injection-molded product.

### TECHNICAL SOLUTION

The injection mold according to an embodiment of the present invention is an injection mold for manufacturing an injection-molded product through injection molding, comprising: a transfer mold, which is disposed in front of the injection-molded product and forms a pattern on a front surface of the injection-molded product; and a rear surface mold which is disposed behind the injection-molded product. An embossing pattern may be formed on a rear surface part of the rear surface mold, which faces a rear surface of the injection-molded product.

In addition, an injection-molded product according to an embodiment of the present invention may be manufactured by the injection mold according to an embodiment of the present invention.

### ADVANTAGEOUS EFFECTS

According to the present invention, the embossing pattern may be formed on the rear surface part of the rear surface mold, which faces the rear surface of the injection-molded product, to realize the effects of achieving the uniform transfer and preventing the outer appearance of the injection-molded product from being deteriorated when the transfer mold forms the pattern on the front surface of the injection-molded product.

### BRIEF DESCRIPTION OF THE DRAWINGS

FIG. 1 is a cross-sectional view illustrating an injection mold according to an embodiment of the present invention.
FIG. 2 is an enlarged cross-sectional view illustrating an area A in FIG. 1.
FIG. 3 is a plan view illustrating an example of a rear surface mold in the injection mold according to an embodiment of the present invention.
FIG. 4 is a plan view illustrating another example of the rear surface mold in the injection mold according to an embodiment of the present invention.

### MODE FOR CARRYING OUT THE INVENTION

The purpose, specified advantages, and novel features of the present invention will be clarified through following embodiments described with reference to the accompanying drawings. Note that the same or similar components in the drawings are designated by the same reference numerals as far as possible even if they are shown in different drawings. The present invention may be embodied in different forms and should not be construed as limited by the embodiments set forth herein. Moreover, in the following description of the present invention, the detailed descriptions of the related well-known art, which may unnecessarily obscure subject matters of the present invention, will be ruled out.

### Injection mold according to embodiment

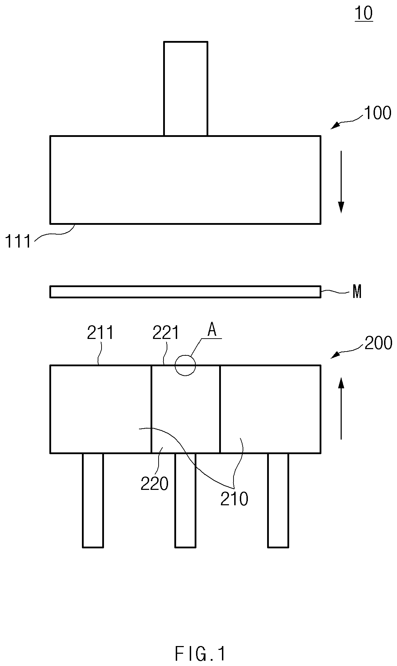

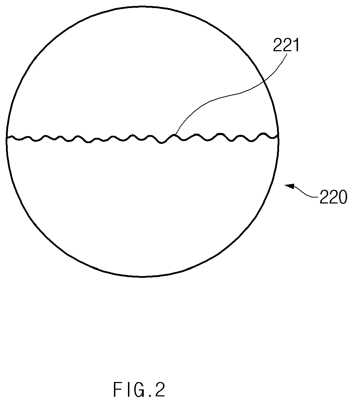

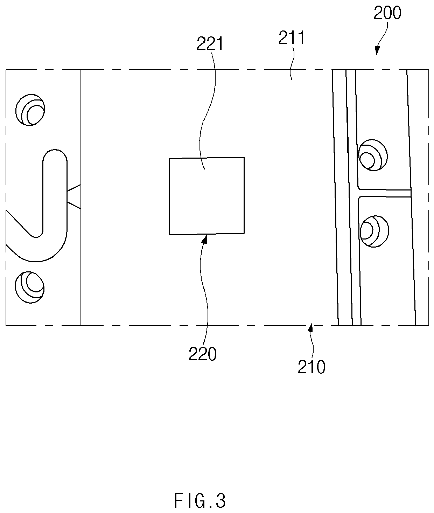

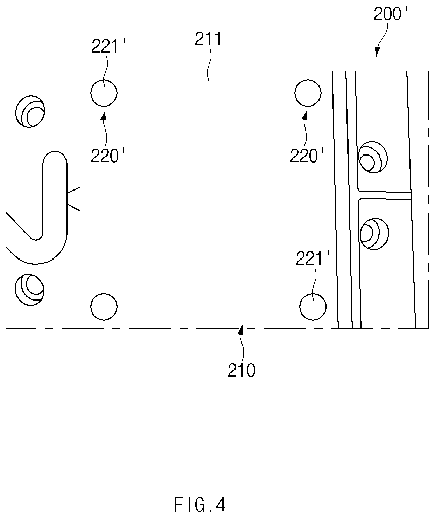

FIG. 1 is a cross-sectional view illustrating an injection mold according to an embodiment of the present invention. FIG. 2 is an enlarged cross-sectional view illustrating an area A in FIG. 1. FIG. 3 is a plan view illustrating an example of a rear surface mold in the injection mold according to an embodiment of the present invention. FIG. 4 is a plan view illustrating another example of the rear surface mold in the injection mold according to an embodiment of the present invention.

Referring to FIGS. 1 to 4, an injection mold 10 according to an embodiment of the present invention is an injection mold for manufacturing an injection-molded product through injection molding, comprising a transfer mold 100, which forms a pattern on a front surface of the injection-molded product M, and a rear surface mold 200, which is disposed behind the injection-molded product M. An embossing pattern is formed on each of rear surface parts 211 and 212 of the rear surface mold 200, which face a rear surface of the injection-molded product M.

In more detail, the transfer mold 100 may be disposed in front of the injection-molded product M to form the pattern on the front surface of the injection-molded product M. Here, the front surface of the injection-molded product M means a surface on a front side of the injection-molded product M. Referring to FIG. 1, the front surface may be a surface on an upper side of the injection-molded product M.

In addition, the pattern may be formed on a front surface part 111 of the transfer mold 100, which faces the front surface of the injection-molded product M, so that the pattern is transferred onto the injection-molded product. An embossing pattern may be formed on the front surface part 111 of the transfer mold 100. Here, the front surface part 111 of the transfer mold 100 may be processed by chemical etching to have roughness on a surface thereof.

The rear surface mold 200 may be disposed behind the injection-molded product M to support the rear surface of the injection-molded product M. Here, the rear surface of the injection-molded product M means a surface on a rear side of the injection-molded product M. Referring to FIG. 1, the rear surface may be a surface on a lower side of the injection-molded product M. For example, the rear surface mold 200 may be disposed below the injection-molded product M.

The embossing pattern may be formed on each of the rear surface parts 211 and 212 of the rear surface mold 200, which face the rear surface of the injection-molded product M.

In addition, the rear surface mold 200 may be provided in a split type. Referring to FIG. 3, in an example, the rear surface mold 200 may comprise a first split mold 210, and a second split mold 220 which is disposed at a central portion of the first split mold 210 on a plan view.

Referring to FIG. 4, in another example, a rear surface mold 200' may comprise a first split mold 210, and a second split mold 220' which is disposed on an edge of the first split mold 210 on a plan view. That is, each of the second split molds 220 and 220' may be disposed at a central portion or an edge of the first split mold 210 (see FIGS. 3 and 4). The edge of the first split mold 210' may be an edge of a portion on which the injection-molded product M is formed in the first split mold 210.

Accordingly, the second split mold 220 may move upward relative to the first split mold 210 after the injection, and the injection-molded product M may be easily separated from the rear surface mold 200.

Referring to FIG. 3, in an example, a cross-section of the second split mold 220 may be formed in a quadrangle shape. A coupling hole corresponding to the second split mold 220 may be formed in the first split mold 210 so that the second split mold 220 is coupled to the first split mold.

Referring to FIG. 4, in another example, a cross-section of the second split mold 220' may be formed in a circular shape. A rear surface part 221' of the second split mold 220' may be formed in a circular shape on a plan view.

An embossing pattern may be formed on each of rear surface parts 211 and 212 of the first split mold 210 and the second split mold 220, which face the rear surface of the injection-molded product M.

In addition, each of the rear surface parts 211 and 212 of the rear surface mold 200 may be processed by chemical etching to have roughness on a surface thereof.

In a first example, the roughness of the embossing pattern, which is formed on each of the rear surface parts 211 and 212 of the rear surface mold 200, may be the same as the roughness of the embossing pattern which is formed on the front surface part 111 of the transfer mold 100. Here, the embossing pattern, which is formed on each of the rear surface parts 211 and 212 and the front surface part 111, may have a roughness Ra of, for example, 50 um or less. Specifically, for example, the roughness Ra of the embossing pattern, which is formed on each of the rear surface parts 211 and 212 and the front surface part 111, may be 5.8 um to 30 um. Here, the roughness Ra of the embossing pattern is equal to or greater than the lower bound value of 5.8 um so that a sense of difference in a mold-split portion may be remarkably reduced or may not occur in the injection-molded product M. More specifically, for example, the roughness Ra of the embossing pattern, which is formed on each of the rear surface parts 211 and 212 and the front surface part 111, may be 10 um.

In a second example, the roughness of the embossing pattern on each of the rear surface parts 211 and 212 may be greater than the roughness of the embossing pattern on the front surface part 111. For example, the roughness Ra of the embossing pattern on each of the rear surface parts 211 and 212 may be greater by 5 um to 15 um than the roughness Ra of the embossing pattern on the front surface part 111. Specifically, for example, the roughness Ra of the embossing pattern on each of the rear surface parts 211 and 212 may be greater by 10 um than the roughness Ra of the embossing pattern on the front surface part 111.

Thus, the injection mold 10 according to an embodiment of the present invention, which is configured as above, has an effect of achieving uniform transfer onto the injection-molded product during injection because the embossing pattern is formed on each of the rear surface parts 211 and 221 of the rear surface mold 200, which face the rear surface of the injection-molded product M.

Particularly, in the rear surface mold 200 having a split structure, since the embossing pattern is formed on each of the rear surface parts 211 and 221, heat exchange may become faster during the injection. Accordingly, the uniform transfer may be performed so that a sense of difference is not accompanied by the injection-molded product M corresponding to a split mold portion.

### <Manufacturing Example 1>

Manufactured was an injection mold comprising a transfer mold, which is disposed in front of an injection-molded product to form a pattern on a front surface of the injection-molded product, and a rear surface mold, which is disposed behind the injection-molded product. In addition, the rear surface mold was formed as a mold in a two-part split type, comprising a first split mold, and a second split mold disposed at a central portion of the first split mold on a plan view.

Embossing patterns having the same roughness were formed respectively on a rear surface part of the rear surface mold, which faces a rear surface of the injection-molded product, and on a front surface part of the transfer mold, which faces the front surface of the injection-molded product. Here, in the rear surface mold, a first split mold and a second split mold were formed respectively with the embossing patterns having the same roughness.

A chemical etching process was performed so that the embossing pattern, which is formed on each of the rear surface part of the rear surface mold and the front surface part of the transfer mold, has a roughness Ra of 10 µm.

In addition, each of the rear surface mold and the transfer mold was made of a HP4M material, and an ASA resin was used as a material to be injected.

### <Manufacturing Example 2>

An injection mold was manufactured using the same method as Embodiment 1, except that a rear surface part of a rear surface mold was processed by chemical etching to form an embo pattern having a roughness Ra of 20 um, and a front surface part of a transfer mold was processed by chemical etching to form an embo pattern having a roughness Ra of 10 µm.

### <Comparative Example 1>

An injection mold was manufactured using the same method as Embodiment 1, except that in a rear surface mold, a rear surface part of a second split mold was processed by lapping to have a surface roughness Ra of 0.2 um, and a rear surface part of a first split mold was processed by polishing to have a surface roughness Ra of 1.6 um.

### <Comparative Example 2>

An injection mold was manufactured using the same method as Embodiment 1, except that in a rear surface mold, each of a rear surface part of a second split mold and a rear surface part of a first split mold was processed by polishing to have a surface roughness Ra of 1.6 um.

### <Comparative Example 3>

An injection mold was manufactured using the same method as Embodiment 1, except that in a rear surface mold, a rear surface part of a second split mold was processed by chemical etching to have a surface roughness Ra of 10 um, and a rear surface part of a first split mold was processed by polishing to have a surface roughness Ra of 1.6 um.

### <Comparative Example 4>

An injection mold was manufactured using the same method as Embodiment 1, except that in a rear surface mold, a rear surface part of a second split mold was processed by chemical etching to have a surface roughness Ra of 20 um, and a rear surface part of a first split mold was processed by polishing to have a surface roughness Ra of 1.6 um.

### <Comparative Example 5>

An injection mold was manufactured using the same method as Embodiment 1, except that in a rear surface mold, a rear surface part of a second split mold was processed by polishing to have a surface roughness Ra of 1.6 um, and a rear surface part of a first split mold was processed by lapping to have a surface roughness Ra of 0.2 um.

### <Comparative Example 6>

An injection mold was manufactured using the same method as Embodiment 1, except that in a rear surface mold, a rear surface part of a second split mold was processed by polishing to have a surface roughness Ra of 1.6 um, and a rear surface part of a first split mold was processed by chemical etching to have a surface roughness Ra of 10 µm.

### <Comparative Example 7>

An injection mold was manufactured using the same method as Embodiment 1, except that in a rear surface mold, a rear surface part of a second split mold was processed by polishing to have a surface roughness Ra of 1.6 um, and a rear surface part of a first split mold was processed by chemical etching to have a surface roughness Ra of 20 µm.

### <Experimental Example 1>

Samples for evaluating appearances of Manufacturing Examples 1 and 2 and Comparative Examples 1 to 7 were manufactured under the same molding conditions by applying Ls Mtron LGE-II 220N electric molding machine.

All measurements in the experiment results mean appearance surfaces on micro-embo patterned top surfaces. In order to quantify characteristics of change in outer appearance of molded products, the degree of transfer was evaluated with a gloss-meter, and the results thereof are shown in Table 1 below.

**[Table 1]**

| | Exterior gloss | Interior gloss | Gloss gap | Evaluation through naked eyes (sense of difference) |
|---|---|---|---|---|
| Manufacturing Example 1 | 5.4 | 5.2 | 0.2 | X |
| Manufacturing Example 2 | 5.4 | 5.2 | 0.2 | X |
| Comparative Example 1 | 5.8 | 5.3 | 0.5 | ○ |
| Comparative Example 2 | 6.1 | 5.5 | 0.6 | ○ |
| Comparative Example 3 | 5.5 | 5.2 | 0.3 | ○ |
| Comparative Example 4 | 5.5 | 5.2 | 0.3 | ○ |
| Comparative Example 5 | 5.8 | 5.3 | 0.5 | ○ |
| Comparative Example 6 | 5.8 | 5.4 | 0.4 | ○ |
| Comparative Example 7 | 5.8 | 5.5 | 0.3 | ○ |

As shown in Table 1, it may be seen that when compared with the results of evaluating the outer appearance through the naked eyes, the sense of difference due the difference in embossed pattern was observed as a sense of difference in glossy portion through the naked eyes when the gloss gap is 0.3 or more. That is, it may be seen that the sense of difference in glossy portion does not occur for Manufacturing Examples 1 and 2, whereas the sense of difference in glossy portion occurs in Comparative Examples 1 to 7. Thus, it is seen that uniform transfer is achieved when the embossing pattern is formed through the chemical etching process so that the rear surface part of the rear surface mold, which faces the injection-molded product, have a surface roughness Ra of 10 um and 20 um.

Although the present invention has been described with reference to the limited embodiments, the embodiments are merely intended to specifically describe the present invention, and the present invention is not limited thereto. The present invention may be variously implemented by those of ordinary skill in the art within the technical idea of the present invention.

The specific protective scope of the present invention will become apparent from the appended claims.

### [Description of the Symbols]

- 10:: Injection mold
- 100:: Transfer mold
- 111:: Front surface part
- 200:: Rear surface mold
- 210:: First split mold
- 220:: Second split mold
- 211, 221:: Rear surface part
- M:: Injection-molded product

## Claims

1. An injection mold for manufacturing an injection-molded product through injection molding, the injection mold comprising:
a transfer mold disposed in front of the injection-molded product and configured to form a pattern on a front surface of the injection-molded product; and
a rear surface mold disposed behind the injection-molded product,
wherein an embossing pattern is formed on a rear surface part of the rear surface mold, which faces a rear surface of the injection-molded product.

2. The injection mold of claim 1, wherein the rear surface mold is provided in a split type.

3. The injection mold of claim 2, wherein the rear surface mold comprises a first split mold, and a second split mold which is disposed at a central portion or an edge of the first split mold on a plan view.

4. The injection mold of claim 3, wherein the embossing pattern is formed on each of rear surface parts of the first split mold and the second split mold, which face the injection-molded product.

5. The injection mold of claim 1, wherein an embossing pattern is formed on a front surface part of the transfer mold, which faces the front surface of the injection-molded product.

6. The injection mold of claim 5, wherein a roughness of the embossing pattern formed on the rear surface part of the rear surface mold is the same as a roughness of the embossing pattern formed on the front surface part of the transfer mold.

7. The injection mold of claim 6, wherein the embossing pattern, which is formed on each of the rear surface part of the rear surface mold and the front surface part of the transfer mold, has a roughness Ra of 5.8 um to 30 µm.

8. The injection mold of claim 5, wherein a roughness of the embossing pattern on the rear surface part of the rear surface mold is greater than a roughness of the embossing pattern on the front surface part of the transfer mold.

9. The injection mold of claim 8, wherein the roughness Ra of the embossing pattern on the rear surface part of the rear surface mold is greater by 5 µm to 15 µm than the roughness Ra of the embossing pattern on the front surface part of the transfer mold.

10. The injection mold of claim 1, wherein the rear surface part of the rear surface mold is processed by chemical etching to have a roughness on a surface thereof.

11. An injection-molded product manufactured by the injection mold according to any one of claims 1 to 10.
